# EUROPEAN PATENT SPECIFICATION

(11) **EP 3 290 315 B1**
(45) Date of publication and mention of the grant of the patent: **19.02.2020**
(21) Application number: 16186158.8
(22) Date of filing: 29.08.2016
(51) Int. Cl.: B62K 5/10, B62K 7/04, B62K 5/00

(54) **LEANING CARGO MULTI-WHEELER**
SCHWENKENDES MEHRRÄDRIGES FRACHTFAHRZEUG
VÉHICULE DE CARGO INCLINABLE MULTI-ROUES

(43) Date of publication of application: 07.03.2018
(73) Proprietor: Babboe B.V., 3816 BV Amersfoort (NL)
(72) Inventor: Markvoort, Hendrikus Cornelis, 3583 AB Utrecht (NL)
(74) Representative: 't Jong, Bastiaan Jacob

(56) References cited:
- EP-A2- 1 484 239
- WO-A1-2015/067760
- DE-U1-202014 105 567
- US-B1- 7 708 291

## Description

The invention relates to a leaning cargo multi-wheeler comprising:
- a frame extending along a vertical plane;
- at least one first wheel arranged on a first end of the frame;
- a sub-frame arranged at a second end of the frame, which sub-frame has two spaced apart mounting points arranged one above the other in the vertical plane;
- a parallelogram rod system having first and second parallel main rods and third and fourth auxiliary rods each connecting the adjacent ends of the first and second main rods respectively, wherein the center zone of the first main rod is hingedly mounted to the first mounting point of the sub-frame, wherein the center zone of the second main rod is hingedly mounted to the second mounting point of the sub-frame, wherein the hinge axes of the first and second main rods are parallel and extend in the vertical plane and wherein the first hinge axis is arranged above the second hinge axis;
- two second wheels each arranged to the third and fourth auxiliary rods respectively;
wherein at least one of the at least one first wheel is steerable or the two second wheels are steerable;
- a container providing a cargo space, which container is arranged to the frame, has a bottom extending over the parallelogram rod system and has an upstanding wall arranged along the periphery of the bottom.

Such a leaning multi-wheeler is for example known from WO 2015067760. This publication describes a leaning multi-wheeler frame on which a container is arranged for transporting passengers.

The container has a stepped bottom to allow sufficient space for the parallelogram rod system, when the frame leans to a side. This allows for the center of gravity of the container to be relatively low. The container is positioned largely in front of the parallelogram rod system with the two wheels, such that the elevated portion of the bottom of the container can be used as seat for the passengers. However, the balance of the multi-wheeler is impeded by this positioning. When passengers enter the container via the front, the weight of the passengers could tip the multi-wheeler, such that the first wheel looses contact with the ground.

If the container would be used as cargo space, the stepped floor makes it difficult to store cargo and the weight of the cargo which could cause the multi-wheeler to tip.

If a container with a flat bottom were to be used with the tilting mechanism of WO 2015067760, then the container would have to be positioned substantially higher on the frame to allow sufficient space for the parallelogram rod system, when frame leans to a side. This higher position of the container will cause a higher center of gravity, which negatively impacts the driveability of the multi-wheeler.

Accordingly it is an object of the invention to reduce or even remove the above mentioned disadvantages.

This object is achieved according to the invention with a leaning cargo multi-wheeler according to the preamble, which is characterized in that the first main rod is W-shaped.

As the first main rod is positioned closest to the bottom of the container, the W-shape of the first main rod provides on both sides of the mounting point cavities in the first main rod of the parallelogram rod system, in which cavities the edges of the bottom can be accommodated when the frame leans to a side.

This allows for a flat bottom of the container and having a relative low center of gravity. As a result, the cargo space of the container can be used more efficiently, without negatively impacting the driveability of the multi-wheeler.

The parallelogram rod system with W-shaped first main rod even allows for an independent suspension of both second wheels in combination with the leaning functionality of the invention. The W-shaped first main rod and the second main rod would therefore each be embodied with two hinged rod elements, wherein the hinge point of two rod elements coincides or is arranged close to the respective mounting points. The rod elements of the W-shaped first main rod would then each have a V-shape connected via a hing.

In a preferred embodiment of the leaning cargo multi-wheeler according to the invention the W-shaped first main rod has four sections wherein each section is angled relative to the adjacent sections and the combined length of the two inner sections is at least equal to the width of the bottom of the container in the plane of the parallelogram rod system.

Each section forms part of the W-shape. The two sections closest to the first mounting point are considered the inner sections, while the two sections closest to the ends of the first main rod are considered the outer sections.

By having the length of the inner sections at least equal to the width of the bottom, the frame with the container can be leaning to such a degree, that the bottom lies against one of the inner sections and the maximum leaning angle is achieved.

In a further preferred embodiment of the leaning cargo multi-wheeler according to the invention the angle between an outer section and an adjacent inner section is equal or larger than the angle between the bottom and the upstanding wall of the container in the plane of the parallelogram rod system.

When the container is leaning to one side and the bottom is flat against an inner section of the first main rod, then the outer section should at least run parallel to the upstanding wall of the container. Having the angle between the inner section and the outer section equal to the angle between the bottom and the upstanding wall will ensure that the track width of the second wheels can be minimized, while having a maximum leaning angle for the frame with container.

In yet another embodiment of the leaning cargo multi-wheeler according to the invention spring means are arranged between the mounting point of the first main rod and a first end of the second main rod and between the mounting point of the first main rod and a second end of the second main rod.

The spring means allow for the frame to re-erect itself to the upright position. The spring means further contribute to a compensation of the displacement of the center of gravity of the cargo in the container, when the frame leans into a curve when the multi-wheeler is moving. This improves the driveability of the multi-wheeler.

By having the spring means between the first mounting point and the ends of the second rod, the cavity in the W-shaped first main rod is not blocked by the spring means. In the leaning multi-wheeler of WO 2015067760 the spring means are arranged between the second mounting point and the ends of the first rod, which would block the advantages if a W-shaped first main rod were to be used.

In yet a further preferred embodiment of the leaning cargo multi-wheeler according to the invention the spring means comprise two progressive springs, preferably gas-springs, each arranged between the mounting point and one of the ends of the second main rod respectively.

Progressive gas-spring are easy to integrate in the parallelogram rod system. The progressive spring force provide an increasing counter force when the frame is leaning under an increasing angle. This ensures that the frame easily returns in the upright position and further improves the driveability when high speed corners are made with the multi-wheeler of the invention.

Preferably, the multi-wheeler according to the invention comprises further locking means for locking the movement of the parallelogram rod system.

In a further preferred embodiment the spring means comprise progressive gas-springs and is at least one of the gas-springs lockable.

Gas-springs can simply be provided with a lock, which is for example operable by a handle connected via a Bowden cable. By locking the gas-spring, the parallelogram rod system is locked in the current position, disabling the leaning feature of the multi-wheeler.

In yet another embodiment of the leaning cargo multi-wheeler according to the invention the second wheels are each arranged via a swivel axis to the third and fourth auxiliary rods respectively, wherein a steering wheel is arranged on the frame and wherein linked steering rods are arranged between the two second wheels and the steering wheel.

Although the first wheel could also be steerable, it is preferred to have the second wheels steerable. This allows for a high steering accuracy of in particular the widest part of the multi-wheeler.

In still another embodiment of the leaning cargo multi-wheeler according to the invention the multi-wheeler is a bike and wherein the first wheel is driven.

The leaning cargo multi-wheeler bike is suitable for transporting children or to transport packages and the like in a city environment, where the use of powered transport vehicles is not always allowed or restricted.

These and other features of the invention will be elucidated in conjunction with the accompanying drawings.
Figure 1 shows a perspective view of a bike according to the invention.
Figures 2A and 2B shows a front view of the parallelogram rod system in two positions.

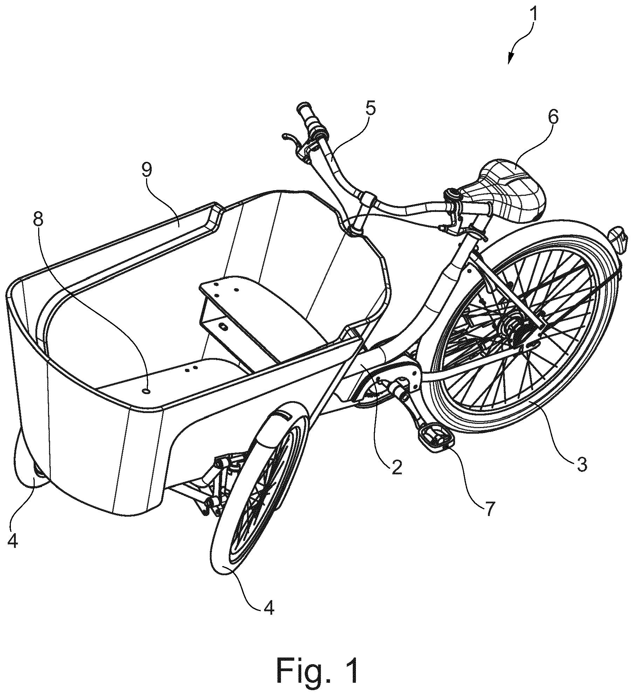

Figure 1 shows a bike 1 with a frame 2. A rear wheel 3 is arranged on one end of the frame 2, while two front wheels 4 are arranged on the other end of the frame 2.

A steering wheel 5 is arranged on the frame 2 and coupled to the front wheels 4, such that the front wheels 4 can be steered.

Furthermore, a saddle 6 is provided on the frame 2 as well as a peddle drive 7 for driving the rear wheel 3.

A container with a flat bottom 8 and an upright wall 9 along the periphery of the bottom 8 is arranged to the frame 2 and between the front wheels 4.

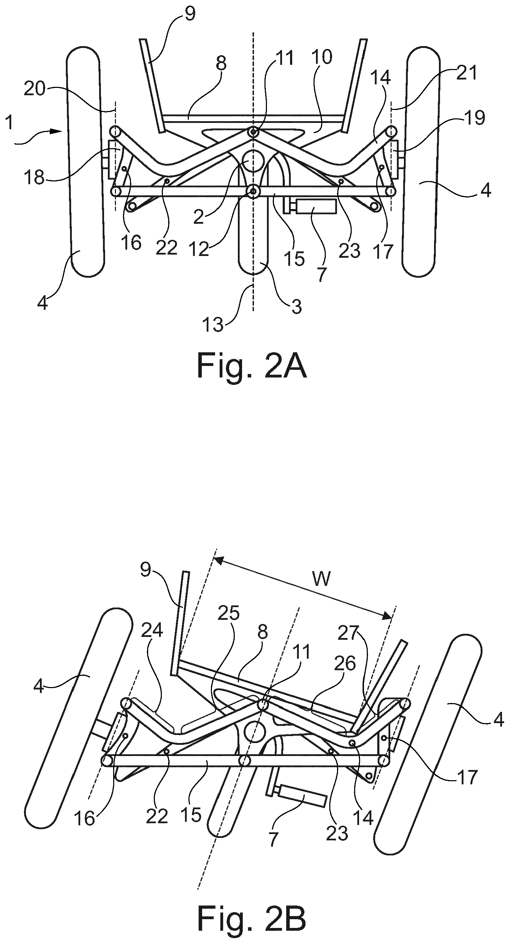

Figure 2A shows the bike 1 in upright position. A sub-frame 10 is arranged to the frame 2. The sub-frame 10 has a first mounting point 11 and a second mounting point 12. The vertical plane 13 runs through these two mounting points 11, 12. A first main rod 14 is arranged hingedly to the mounting point 11, while a second main rod 15 is arranged hingedly to the mounting point 12.

A third auxiliary rod 16 and a fourth auxiliary rod 17 is arranged between the adjacent ends of the first and second main rods 14, 15 respectively to form a parallelogram rod system.

A hub 18, 19 is arranged along a swivel axis 20, 21 to the auxiliary rods 16, 17. The wheels 4 are rotatably arranged to the hubs 18, 19 and due to the swivel axes 20, 21 steerable.

Furthermore, two gas-springs 22, 23 are arranged between the first mounting point 11 and the respective ends of the second main rod 15.

As shown in figure 2B, the parallelogram rod system 14, 15, 16, 17 allow the frame 2 and therefore the container 8, 9 to lean to a side, while the front wheels 4 lean to the same side.

The first main rod 14 has a W-shape with four sections 24, 25, 26, 27, which are each under an angle with each other. The W-shape provides on both sides of the mounting point 11 cavities in the first main rod 14 which accommodate the edge of the bottom 8 and upstanding wall 9.

The length of the inner sections 25, 26 is about the same as the width W of the bottom 8 of the container 8, 9. The outer sections 24, 27 are attached to the respective inner sections 25, 26 under an angle, which is larger than the angle between the bottom 8 and the upstanding wall 9.

Because the gas-springs 22, 23 are arranged between the top first mounting point 11 and the ends of the second main rod 15, the gas-springs 22, 23 do not interfere with the space provided by the W-shaped first main rod 14, while the gas-springs 22, 23 do contribute to the ability of the bike 1 to move to the upright position of figure 2A, while also contributing to the driveability of the bike 1.

## Claims

1. Leaning cargo multi-wheeler (1) comprising:
- a frame (2) extending along a vertical plane (13);
- at least one first wheel (3) arranged on a first end of the frame (2);
- a sub-frame (10) arranged at a second end of the frame (2), which sub-frame (10) has two spaced apart mounting points (11, 12) arranged one above the other in the vertical plane (13);
- a parallelogram rod system (14, 15, 16, 17) having first (14) and second (15) parallel main rods and third (16) and fourth (17) auxiliary rods each connecting the adjacent ends of the first (14) and second (15) main rods respectively, wherein the center zone of the first main rod (14) is hingedly mounted to the first mounting point (11) of the sub-frame (10), wherein the center zone of the second main rod (15) is hingedly mounted to the second mounting point (12) of the sub-frame, wherein the hinge axes of the first and second main rods (14, 15) are parallel and extend in the vertical plane (13) and wherein the first hinge axis is arranged above the second hinge axis;
- two second wheels (4) each arranged to the third (16) and fourth (17) auxiliary rods respectively;
wherein at least one of the at least one first wheel (3) is steerable or the two second wheels (4) are steerable;
- a container (8, 9) providing a cargo space, which container (8, 9) is arranged to the frame (2), has a bottom (8) extending over the parallelogram rod system (14, 15, 16, 17) and has an upstanding wall (9) arranged along the periphery of the bottom (8),
**characterized in that**
the first main rod (14) is W-shaped.

2. Leaning cargo multi-wheeler (1) according to claim 1, wherein the W-shaped first main rod (14) has four sections (24, 25, 26, 27) wherein each section (24, 25, 26, 27) is angled relative to the adjacent sections (24, 25, 26, 27) and the combined length of the two inner sections (25, 26) is at least equal to the width of the bottom (8) of the container in the plane of the parallelogram rod system (14, 15, 16, 17).

3. Leaning cargo multi-wheeler (1) according to claim 2, wherein the angle between an outer section (24, 27) and an adjacent inner section (25, 26) is equal or larger than the angle between the bottom (8) and the upstanding wall (9) of the container in the plane of the parallelogram rod system (14, 15, 16, 17).

4. Leaning cargo multi-wheeler (1) according to any of the preceding claims, wherein spring means (22, 23) are arranged between the mounting point (11) of the first main rod (14) and a first end of the second main rod (15) and between the mounting point (11) of the first main rod (14) and a second end of the second main rod (15).

5. Leaning cargo multi-wheeler (1) according to claim 4, wherein the spring means (22, 23) comprise two progressive -springs, preferably gas-springs, each arranged between the mounting point (11) and one of the ends of the second main rod (15) respectively.

6. Leaning cargo multi-wheeler (1) according to any of the preceding claims, further comprising locking means for locking the movement of the parallelogram rod system (14, 15, 16, 17).

7. Leaning cargo multi-wheeler (1) according to claim 5 and 6, wherein the progressive springs are gas-springs (22, 23) and wherein at least one of the gas-springs (22, 23) is lockable.

8. Leaning cargo multi-wheeler (1) according to any of the preceding claims, wherein the second wheels (4) are each arranged via a swivel axis (20, 21) to the third (16) and fourth (17) auxiliary rods respectively, wherein a steering wheel (5) is arranged on the frame (2) and wherein linked steering rods are arranged between the two second wheels (4) and the steering wheel (5).

9. Leaning cargo multi-wheeler (1) according to any of the preceding claims, wherein the multi-wheeler (1) is a bike and wherein the first wheel (3) is driven.

## Patentansprüche

1. Sich neigendes mehrrädriges Lastenfahrzeug (1), umfassend:
- einen Rahmen (2), der sich entlang einer vertikalen Ebene (13) erstreckt;
- zumindest ein erstes Rad (3), das auf einem ersten Ende des Rahmens (2) angeordnet ist;
- ein Untergestell (10), das an einem zweiten Ende des Rahmens (2) angeordnet ist, wobei das Untergestell (10) zwei voneinander beabstandete Befestigungspunkte (11, 12) aufweist, die in der vertikalen Ebene (13) übereinander angeordnet sind;
- ein Parallelogramm-Stangensystem (14, 15, 16, 17), das eine erste (14) und eine zweite (15) parallele Hauptstange und eine dritte (16) und eine vierte (17) Hilfsstange, die je die benachbarten Enden der ersten (14) und der zweiten (15) Hauptstange miteinander verbinden, aufweist, wobei der zentrale Bereich der ersten Hauptstange (14) drehbar an dem ersten Befestigungspunkt (11) des Untergestells (10) befestigt ist, wobei der zentrale Bereich der zweiten Hauptstange (15) drehbar an dem zweiten Befestigungspunkt (12) des Untergestells befestigt ist, wobei die Drehachsen der ersten und der zweiten Hauptstange (14, 15) parallel sind und sich in der vertikalen Ebene (13) erstrecken, und wobei die erste Drehachse oberhalb der zweiten Drehachse angeordnet ist;
- zwei zweite Räder (4), von denen jedes an der dritten (16) bzw. vierten (17) Hilfsstange angeordnet ist;
- wobei zumindest eines des zumindest einen ersten Rades (3) lenkbar ist oder die zwei zweiten Räder (4) lenkbar sind;
- einen Behälter (8, 9), der einen Laderaum bereitstellt, wobei der Behälter (8, 9) an dem Rahmen (2) angeordnet ist, einen Boden (8) aufweist, der sich über das Parallelogramm-Stangensystem (14, 15, 16, 17) erstreckt, und eine aufrechte Wand (9) aufweist, die entlang des Umfangs des Bodens (8) angeordnet ist,
**dadurch gekennzeichnet, dass**
die erste Hauptstange (14) W-förmig ist.

2. Sich neigendes mehrrädriges Lastenfahrzeug (1) nach Anspruch 1, wobei die W-förmige erste Hauptstange (14) vier Abschnitte (24, 25, 26, 27) aufweist, wobei jeder Abschnitt (24, 25, 26, 27) bezüglich der benachbarten Abschnitte (24, 25, 26, 27) gewinkelt ist und die kombinierte Länge der zwei inneren Abschnitte (25, 26) zumindest gleich wie die Breite des Bodens (8) des Behälters in der Ebene des Parallelogramm-Stangensystems (14, 15, 16, 17) ist.

3. Sich neigendes mehrrädriges Lastenfahrzeug (1) nach Anspruch 2, wobei der Winkel zwischen einem äußeren Abschnitt (24, 27) und einem benachbarten inneren Abschnitt (25, 26) gleich wie oder größer als der Winkel zwischen dem Boden (8) und der aufrechten Wand (9) des Behälters in der Ebene des Parallelogramm-Stangensystems (14, 15, 16, 17) ist.

4. Sich neigendes mehrrädriges Lastenfahrzeug (1) nach einem der vorstehenden Ansprüche, wobei Federmittel (22, 23) zwischen dem Befestigungspunkt (11) der ersten Hauptstange (14) und einem ersten Ende der zweiten Hauptstange (15) und zwischen dem Befestigungspunkt (11) der ersten Hauptstange (14) und einem zweiten Ende der zweiten Hauptstange (15) angeordnet sind.

5. Sich neigendes mehrrädriges Lastenfahrzeug (1) nach Anspruch 4, wobei die Federmittel (22, 23) zwei progressive Federn, vorzugsweise Gasfedern, umfassen, von denen jede jeweils zwischen dem Befestigungspunkt (11) und einem der Enden der zweiten Hauptstange (15) angeordnet ist.

6. Sich neigendes mehrrädriges Lastenfahrzeug (1) nach einem der vorstehenden Ansprüche, das weiter ein Sperrmittel zum Sperren der Bewegung des Parallelogramm-Stangensystems (14, 15, 16, 17) umfasst.

7. Sich neigendes mehrrädriges Lastenfahrzeug (1) nach Anspruch 5 und 6, wobei die progressiven Federn Gasfedern (22, 23) sind und wobei zumindest eine der Gasfedern (22, 23) sperrbar ist.

8. Sich neigendes mehrrädriges Lastenfahrzeug (1) nach einem der vorstehenden Ansprüche, wobei die zweiten Räder (4) je über eine Schwenkachse (20, 21) an der dritten (16) bzw. der vierten (17) Hilfsstange angeordnet sind, wobei ein Lenkrad (5) auf dem Rahmen (2) angeordnet ist und wobei miteinander verbundene Lenkstangen zwischen den zwei zweiten Rädern (4) und dem Lenkrad (5) angeordnet sind.

9. Sich neigendes mehrrädriges Lastenfahrzeug (1) nach einem der vorstehenden Ansprüche, wobei das mehrrädrige Fahrzeug (1) ein Fahrrad ist und wobei das erste Rad (3) angetrieben ist.

## Revendications

1. Véhicule multi-roues de transport de cargaison inclinable (1) comprenant :
- un cadre (2) s'étendant le long d'un plan vertical (13) ;
- au moins une première roue (3) agencée à une première extrémité du cadre (2) ;
- un sous-cadre (10) agencé à une deuxième extrémité du cadre (2), le sous-cadre (10) ayant deux points de montage espacés l'un de l'autre (11, 12) agencés l'un au-dessus de l'autre dans le plan vertical (13) ;
- un système de tiges en parallélogramme (14, 15, 16, 17) ayant des première (14) et deuxième (15) tiges principales parallèles et des troisième (16) et quatrième (17) tiges auxiliaires, chacune d'elles raccordant respectivement les extrémités adjacentes des première (14) et deuxième (15) tiges principales, dans lequel la zone centrale de la première tige principale (14) est montée en charnière sur le premier point de montage (11) du sous-cadre (10), dans lequel la zone centrale de la deuxième tige principale (15) est montée en charnière sur le deuxième point de montage (12) du sous-cadre, dans lequel les axes de charnière des première et deuxième tiges principales (14, 15) sont parallèles et s'étendent dans le plan vertical (13) et dans lequel le premier axe de charnière est agencé au-dessus du deuxième axe de charnière ;
- deux deuxièmes roues (4), chacune d'elles étant agencée respectivement sur les troisième (16) et quatrième (17) tiges auxiliaires ;
dans lequel au moins l'une de l'au moins une première roue (3) est orientable ou les deux deuxièmes roues (4) sont orientables ;
- un contenant (8, 9) fournissant un espace de cargaison, le contenant (8, 9) étant agencé sur le cadre (2), ayant un fond (8) s'étendant sur le système de tiges en parallélogramme (14, 15, 16, 17) et ayant une paroi verticale (9) agencée le long de la périphérie du fond (8),
**caractérisé en ce que**
la première tige principale (14) est en forme de W.

2. Véhicule multi-roues de transport de cargaison inclinable (1) selon la revendication 1, dans lequel la première tige principale en forme de W (14) a quatre sections (24, 25, 26, 27), dans lequel chaque section (24, 25, 26, 27) est inclinée par rapport aux sections adjacentes (24, 25, 26, 27) et la longueur combinée des deux sections intérieures (25, 26) est au moins égale à la largeur du fond (8) du contenant dans le plan du système de tiges en parallélogramme (14, 15, 16, 17).

3. Véhicule multi-roues de transport de cargaison inclinable (1) selon la revendication 2, dans lequel l'angle entre une section extérieure (24, 27) et une section intérieure adjacente (25, 26) est supérieur ou égal à l'angle entre le fond (8) et la paroi verticale (9) du contenant dans le plan du système de tiges en parallélogramme (14, 15, 16, 17).

4. Véhicule multi-roues de transport de cargaison inclinable (1) selon l'une quelconque des revendications précédentes, dans lequel des moyens de ressort (22, 23) sont agencés entre le point de montage (11) de la première tige principale (14) et une première extrémité de la deuxième tige principale (15) et entre le point de montage (11) de la première tige principale (14) et une deuxième extrémité de la deuxième tige principale (15).

5. Véhicule multi-roues de transport de cargaison inclinable (1) selon la revendication 4, dans lequel les moyens de ressort (22, 23) comprennent deux ressorts progressifs, de préférence des ressorts à gaz, chacun d'eux étant agencé respectivement entre le point de montage (11) et l'une des extrémités de la deuxième tige principale (15).

6. Véhicule multi-roues de transport de cargaison inclinable (1) selon l'une quelconque des revendications précédentes, comprenant en outre des moyens de verrouillage pour verrouiller le mouvement du système de tiges en parallélogramme (14, 15, 16, 17).

7. Véhicule multi-roues de transport de cargaison inclinable (1) selon les revendications 5 et 6, dans lequel les ressorts progressifs sont des ressorts à gaz (22, 23) et dans lequel au moins l'un des ressorts à gaz (22, 23) est verrouillable.

8. Véhicule multi-roues de transport de cargaison inclinable (1) selon l'une quelconque des revendications précédentes, dans lequel chacune des deuxièmes roues (4) est agencée par l'intermédiaire d'un axe de pivot (20, 21) respectivement aux troisième (16) et quatrième (17) tiges auxiliaires, dans lequel un volant (5) est agencé sur le cadre (2) et dans lequel des tiges de direction liées sont agencées entre les deux deuxièmes roues (4) et le volant (5).

9. Véhicule multi-roues de transport de cargaison inclinable (1) selon l'une quelconque des revendications précédentes, dans lequel le véhicule multi-roues (1) est un vélo et dans lequel la première roue (3) est entraînée.
